# EUROPÄISCHE PATENTANMELDUNG

(11) **EP 4 717 386 A1**
(43) Veröffentlichungstag der Anmeldung: **01.04.2026**
(21) Anmeldenummer: 24202424.8
(22) Anmeldetag: 25.09.2024
(51) Int. Cl.: B23C 5/10, B23B 31/00, B23B 31/11, B23D 77/00

(54) **ZERSPANUNGSWERKZEUG**

(71) Anmelder: CERATIZIT Besigheim GmbH, 74354 Besigheim (DE)
(72) Erfinder: MAYER, Manuel, 74354 Besigheim (DE); SPORS, Benno, 74354 Besigheim (DE)
(74) Vertreter: Ciesla, Dirk

(57) **Zusammenfassung**

Zerspanungswerkzeug (1), umfassend einen Schaft (100) und einen Schneidkopf (4), der auf einer geschlossenen Schaftstirnplanfläche (10) des Schafts (100) mit einer geschlossenen Schneidkopfplanfläche (20) aufliegt und durch die geschlossene Schaftstirnplanfläche (10) in eine Schaftausnehmung (11) des Schafts (100) teilweise eingesteckt ist, wobei die Schaftausnehmung (11) von einer Schaftinnenseite (12) des Schafts (100) umfänglich umgeben ist, wobei die Schaftinnenseite (12) mehrere Schaftmitnehmerflanken (13) und alternierend abwechselnd mit den Schaftmitnehmerflanken (13) sie miteinander verbindende Zwischeninnenseitenflächen (14) aufweist, wobei der Schneidkopf (4) eine in die Schaftausnehmung (11) eingesteckte Schneidkopfaußenseite (22) mit mehreren Schneidkopfmitnehmerflanken (23) aufweist, die seitlich so gegen die Schaftmitnehmerflanken (13) anschlagen, dass eine relative Verdrehung des Schneidkopfs (4) zum Schaft (100) gesperrt ist, wobei die Zwischeninnenseitenflächen (14) auf Höhe der Schneidkopfmitnehmerflanken (23) jeweils durchgehend an einen Freiraum (31) zur Schneidkopfaußenseite (22) angrenzen, wobei der Schneidkopf (100) einen in den Schaft (100) zentrierend eingesteckten Zentrierbereich (26) aufweist.

## Beschreibung

Die vorliegende Erfindung betrifft ein Zerspanungswerkzeug.

Die EP 2 958 693 A1 beschreibt ein Fräswerkzeug, das aus einem Werkzeugschaft und einem stirnseitig an diesem befestigten Schneidkopf besteht. Bei dem beschriebenen Fräswerkzeug wird das Drehmoment von dem Werkzeugschaft an den Schneidkopf durch eine Klemmverbindung erreicht, die zugleich für eine Zentrierung des Schneidkopfs sorgen soll. Durch diese Klemmverbindung werden erhebliche radiale Kräfte in den Schaft eingeleitet. Diese radialen Kräfte wirken quer zur Längsachse des Werkzeugschafts und führen zu einer elastischen oder gar plastischen Verformung. Durch diese Verformung wird die ursprünglich präzise Anlage des Schneidkopfs auf dem Schaft und damit seine Zentrierung zum Schaft beeinträchtigt. Der Schneidkopf kann dadurch nicht mehr exakt auf dem Schaft aufliegen, was zu einer verminderten Stabilität und Genauigkeit des Fräswerkzeugs führt.

Insbesondere bei hochpräzisen Zerspanungsoperationen, wie zum Beispiel dem Reiben, bei denen Toleranzen im Mikrometerbereich eingehalten werden müssen, ist diese Problematik von großer Bedeutung. Eine ungenaue Auflage des Schneidkopfs kann zu Vibrationen, ungleichmäßigen Schnitten und einer insgesamt schlechteren Oberflächenqualität der bearbeiteten Werkstücke führen. Darüber hinaus kann die erhöhte Schaftbelastung durch die radialen Kräfte zu einem vorzeitigen Verschleiß des Fräswerkzeugs, insbesondere eines Reibwerkzeugs, und einer verkürzten Lebensdauer führen.

Die Aufgabe der vorliegenden Erfindung besteht darin, ein Zerspanungswerkzeug bereitzustellen, bei dem der Schneidkopf durch eine verbesserte Drehmomentübertragung vom Schaft auf den Schneidkopf präziser auf dem Schaft aufliegt, sich die Qualität der Zerspanungsoperation verbessert und die Lebensdauer verlängert.

Die Aufgabe der vorliegenden Erfindung wird gelöst durch den Gegenstand des Anspruchs 1. Vorteilhafte Weiterbildungen der Erfindung sind den abhängigen Ansprüchen zu entnehmen, die untereinander frei kombinierbar sind.

Das Zerspanungswerkzeug umfasst einen Schaft und einen Schneidkopf, der auf einer geschlossenen Schaftstirnplanfläche des Schafts mit einer geschlossenen Schneidkopfplanfläche aufliegt und durch die geschlossene Schaftstirnplanfläche in eine Schaftausnehmung des Schafts teilweise eingesteckt ist, wobei die Schaftausnehmung von einer Schaftinnenseite des Schafts umfänglich umgeben ist, wobei die Schaftinnenseite mehrere Schaftmitnehmerflanken und alternierend abwechselnd mit den Schaftmitnehmerflanken sie miteinander verbindende Zwischeninnenseitenflächen aufweist, wobei der Schneidkopf eine in die Schaftausnehmung eingesteckte Schneidkopfaußenseite mit mehreren Schneidkopfmitnehmerflanken aufweist, die seitlich so gegen die Schaftmitnehmerflanken anschlagen, dass eine relative Verdrehung des Schneidkopfs zum Schaft um eine zentrale Drehachse des Schafts gesperrt ist, wobei die Zwischeninnenseitenflächen auf Höhe der Schneidkopfmitnehmerflanken jeweils durchgehend an einen Freiraum zur Schneidkopfaußenseite angrenzen, wobei der Schneidkopf einen in den Schaft zentrierend eingesteckten Zentrierbereich aufweist.

Der Begriff "Flanke" in "Schaftmitnehmerflanken" und "Schneidkopfmitnehmerflanken" meint jeweils eine seitliche Fläche im Sinne der Flächen, die bei einer Verzahnung ineinandergreifen. Der Fachmann kann also die "Schaftmitnehmerflanken" und "Schneidkopfmitnehmerflanken" eindeutig haptisch erfassen.

"Auf Höhe der Schneidkopfmitnehmerflanken" bedeutet, dass sich etwas, insbesondere ein Bereich des Schafts, im axialen Erstreckungsbereich der Schneidkopfmitnehmerflanken entlang der zentralen Drehachse des Schafts befindet.

Indem die Zwischeninnenseitenflächen auf Höhe der Schneidkopfmitnehmerflanken jeweils durchgehend an einen Freiraum zur Schneidkopfaußenseite angrenzen, berühren sich der Schneidkopf und die Schaftinnenseite auf Höhe der Schneidkopfmitnehmerflanken nur dort direkt, wo die Schneidkopfmitnehmerflanken seitlich gegen die Schaftmitnehmerflanken anschlagen. Da radiale Reaktionskräfte folglich auf Höhe der Schneidkopfmitnehmerflanken nur dort auftreten können, wo sich die Schaftmitnehmerflanken und die Schneidkopfmitnehmerflanken seitlich durch ihren gegenseitigen Anschlag berühren, ist der radiale Kraftfluss auf Höhe des durch die Schaftmitnehmerflanken und Schneidkopfmitnehmerflanken gebildeten Drehmomentschlusses geringer bis faktisch nicht mehr vorhanden, wodurch sich der Schaft entsprechend weniger bis gar nicht mehr verformt und somit die Form und Abmessungen der geschlossenen Schaftstirnplanfläche entsprechend besser erhalten bleiben.

Indem die Schneidkopfmitnehmerflanken seitlich so gegen die Schaftmitnehmerflanken anschlagen, dass die relative Verdrehung des Schneidkopfs zum Schaft um die zentrale Drehachse des Schafts gesperrt ist, wird ein Drehmomentschluss zwischen der Schaftinnenseite und dem Schneidkopf gebildet, so dass der Schaft unter einer Drehung bezüglich der zentralen Drehachse des Schafts, bei welcher die Schaftmitnehmerflanken voreilend um die zentrale Drehachse des Schafts kreisen und die Schneidkopfmitnehmerflanken nacheilend um die zentrale Drehachse des Schafts kreisen, sein Drehmoment auf den Schneidkopf überträgt und diesen so in eine Schneidkopfdrehung bezüglich der zentralen Drehachse des Schafts versetzt. Da die Schneidkopfmitnehmerflanken dabei seitlich gegen die Schaftmitnehmerflanken anschlagen, sind die dem Drehmoment zugeordneten Reaktionskräfte an den Schneidkopfmitnehmerflanken und Schaftmitnehmerflanken zumindest anteilsmäßig tangential bezüglich der zur zentralen Drehachse des Schneidkreise zentrierten Kreisbahn ausgerichtet. Wenn die Schneidkopfmitnehmerflanken und Schaftmitnehmerflanken jeweils radial und axial erstreckend ausgebildet sind, ist der radiale Kraftfluss in die Schaftinnenseite dann faktisch null, bei reiner Betrachtung eines Kräfteparallelogramms null. Indem die Zwischeninnenseitenflächen auf Höhe der Schneidkopfmitnehmerflanken jeweils durchgehend an einen Freiraum zur Schneidkopfaußenseite angrenzen, findet von dem Schneidkopf auf Höhe der Schneidkopfmitnehmerflanken und außerhalb der Schneidkopfmitnehmerflanken auf die Schaftinnenseite kein radialer Kraftfluss statt.

Indem die Zwischeninnenseitenflächen auf Höhe der Schneidkopfmitnehmerflanken jeweils durchgehend an einen Freiraum zur Schneidkopfaußenseite angrenzen, sind mehrere umfänglich durch das seitliche Anschlagen der Schaftmitnehmerflanken gegen die Schneidkopfmitnehmerflanken gegeneinander abgeschlossene Freiräume zwischen der Schneidkopfaußenseite und der Schaftinnenseite gebildet, die sich jeweils durchgehend entlang einer der Zwischeninnenseitenflächen erstrecken.

Die Schneidkopfmitnehmerflanken sind üblicherweise als ebene Flächen in der Schneidkopfaußenseite ausgebildet. Die Schaftmitnehmerflanken sind üblicherweise als ebene Flächen in der Schaftinnenseite ausgebildet.

Indem die Zwischeninnenseitenflächen auf Höhe der Schneidkopfmitnehmerflanken jeweils durchgehend an einen Freiraum zur Schneidkopfaußenseite angrenzen, schlagen die Schneidkopfmitnehmerflanken außerhalb der Zwischeninnenseitenflächen gegen die Schaftmitnehmerflanken seitlich an, also ohne die Zwischeninnenseitenflächen zu kontaktieren. Dies bedeutet, dass die Schneidkopfmitnehmerflanken die Zwischeninnenseitenflächen nicht berühren, sondern ausschließlich seitlich gegen die Schaftmitnehmerflanken anliegen. Dadurch wird eine präzise und kontrollierte Kraftübertragung gewährleistet, ohne dass die Zwischeninnenseitenflächen in den Kontakt zwischen den Schaftmitnehmerflanken und Schneidkopfmitnehmerflanken einbezogen werden.

Die geschlossene Schaftstirnplanfläche ist senkrecht zur zentralen Drehachse des Schafts in einer Ebene erstreckend und, weil sie geschlossen ist, somit frei von Stufen ausgebildet; die geschlossene Schaftstirnplanfläche kann also bezüglich der zentralen Drehachse des Schafts auf einem gleichbleibenden axialen Höhenniveau vollständig umlaufen werden. Die geschlossene Schneidkopfplanfläche ist senkrecht zur zentralen Drehachse des Schafts in der Ebene erstreckend ohne Stufen ausgebildet, in der die geschlossene Schaftstirnplanfläche senkrecht zur zentralen Drehachse erstreckend ausgebildet ist, so dass die Schneidkopfplanfläche unter Bildung einer planen Anlage auf der geschlossenen Schaftstirnplanfläche aufliegt. Die geschlossene Schaftstirnplanfläche berandet die Schaftausnehmung, womit geschlossene Schaftstirnplanfläche also innenliegend offen ist.

Indem der Schneidkopf den in den Schaft zentrierend eingesteckten Zentrierbereich aufweist, ist der Schneidkopf bezüglich der zentralen Drehachse des Schaft zu dieser zentriert, so dass bei dem Zerspanungswerkzeug die Zentrierung des Schneidkopfs außerhalb des Bereichs des durch die Schneidkopfmitnehmerflanken und Schaftmitnehmerflanken realisierten Drehmomentschlusses und in axialer Richtung entlang der zentralen Drehachse des Schafts von der geschlossenen Schaftstirnplanfläche und der geschlossenen Schneidkopfplanfläche entfernt realisiert ist. Die Zentrierung des Schneidkopfs ist also strukturell unabhängig von der planen Anlage der geschlossene Schneidkopfplanfläche auf der geschlossenen Schaftstirnplanfläche realisier, womit die Schneidkopfmitnehmerflanken üblicherweise in axialer Richtung entlang der zentralen Drehachse des Schafts zwischen dem Zentrierbereich des Schneidkopfs und der geschlossenen Schneidkopfplanfläche ausgebildet und angeordnet sind. Der Schaft weist einen zum Zentrierbereich des Schneidkopfs korrespondierend ausgebildeten Zentrierbereich auf, der den Zentrierbereich des Schneidkopfs bezüglich der zentralen Drehachse des Schafts zentrierend aufnimmt.

Üblicherweise ist der Zentrierbereich des Schneidkopfs durchgehend außenkonusförmig ausgebildet und von einem diesen korrespondierenden durchgehenden innenkonusförmigen Zentrierbereich des Schafts aufgenommen.

Die Freiräume sind üblicherweise jeweils mit Luft gefüllt.

Der Schneidkopf kann monolithisch aus einem gesinterten Hartmetall hergestellt sein. Mit dem gesinterten Hartmetall (englisch cemented carbide) ist ein Verbundwerkstoff gemeint, der eine gesinterte Skelettstruktur aus Hartstoffpartikeln, üblicherweise Metallkarbiden, wie zum Beispiel Wolframkarbid, und in den Zwischenräumen der Skelettstruktur eine Metallbasislegierung aufweist, üblicherweise eine Kobaltbasislegierung. Mit monolithisch ist gemeint, dass die Schneiden eine Einheit mit dem übrigen Schneidkopf bilden. Denkbar und auch möglich ist es aber auch, dass der Schneidkopf aus einem anderen Material, zum Beispiel einem Stahl, und/oder mehrteilig, zum Beispiel aus einem Grundkörper mit reversibel lösbar oder stoffschlüssig gehaltenen Schneidelementen ausgebildet ist.

Der Schaft ist üblicherweise aus einem Stahl hergestellt. Stahl ist gegenüber dem gesinterten Hartmetall duktiler.

Die Anzahl der Schneidkopfmitnehmerflanken, die seitlich gegen die Schaftmitnehmerflanken anschlagen, beträgt üblicherweise drei. Dadurch wird eine gegenüber zwei solchermaßen anschlagenden Schneidkopfmitnehmerflanken gleichmäßigere und stabilere Kraftübertragung gewährleistet, was die Effizienz und Genauigkeit der Zerspanungsoperationen verbessert. Denkbar und auch möglich ist es aber auch, dass die Anzahl der Schneidkopfmitnehmerflanken, die seitlich gegen die Schaftmitnehmerflanken anschlagen, mehr als drei beträgt.

Der Schaft kann einteilig oder mehrteilig ausgebildet sein. Wenn der Schaft mehrteilig ausgebildet ist, kann der Schaft im Bereich der Schaftinnenseite als hülsenförmiges monolithisches Schaftbauteil ausgebildet sein, das auf einer Stirnseite eines weiteren Schaftbauteils des Schafts mit diesem reversibel lösbar oder stoffschlüssig verbunden aufliegen kann. Wenn der Schaft solchermaßen mehrteilig ausgebildet ist, kann ein optionales internes Kühlmittelkanalsystem des Zerspanungswerkzeugs flexibler ausgebildet werden.

Der Schaft ist üblicherweise zumindest im Bereich der Zwischeninnenseitenflächen aus einem gegenüber den Schneidkopfmitnehmerflanken duktileren Material hergestellt. Diese Materialwahl ermöglicht eine einfachere Herstellung des Schafts, während die Formstabilität und Abmessungsstabilität der geschlossenen Schaftstirnplanfläche faktisch beibehalten werden, weil der radiale Kraftfluss durch entsprechende radiale Reaktionskräfte zwischen dem Schneidkopf und dem Schaft auf Höhe des durch die Schaftmitnehmerflanken und die Schneidkopfmitnehmerflanken gebildeten Drehmomentflusses geringer bis faktisch nicht mehr vorhanden ist, verformt sich der Schaft entsprechend weniger bis gar nicht mehr. Dies trägt zur Langlebigkeit und Präzision des Zerspanungswerkzeugs bei.

Gemäß einer Weiterbildung des Zerspanungswerkzeugs weist die Schneidkopfaußenseite alternierend abwechselnd mit den Schneidkopfmitnehmerflanken sie miteinander verbindende Zwischenaußenseitenflächen auf, die jeweils durchgehend an einen der Freiräume angrenzen. Dadurch schlagen die Schaftmitnehmerflanken vollständig außerhalb der Zwischenaußenseitenflächen und damit nur an den Schneidkopfmitnehmerflanken an. Dies führt dazu, dass radiale Reaktionskräfte nur an diesen spezifischen Kontaktbereichen zwischen den Schneidkopfmitnehmerflanken und den Schaftmitnehmerflanken auftreten. Folglich wird der radiale Kraftfluss auf Höhe des durch die Schneidkopfmitnehmerflanken gebildeten Drehmomentflusses reduziert.

Gemäß einer Weiterbildung des Zerspanungswerkzeugs sind die Schneidkopfmitnehmerflanken, die seitlich gegen die Schaftmitnehmerflanken anschlagen, und diese Schaftmitnehmerflanken jeweils radial und axial erstreckend bezüglich der zentralen Drehachse des Schafts ausgebildet. Dadurch werden durch die Schneidkopfmitnehmerflanken in die Schaftmitnehmerflanken im Bereich ihres gegenseitigen seitlichen Anschlags einleitbaren radialen Kräfte gemäß einem Kräfteparallelogramm auf null reduziert.

Gemäß einer Weiterbildung des Zerspanungswerkzeugs sind die Schaftmitnehmerflanken und die Schneidkopfmitnehmerflanken umfänglich so angeordnet, dass die Freiräume durch eine zur relativen Verdrehung entgegensetzte relative Verdrehung des Schneidkopfs zum Schaft um die zentrale Drehachse des Schafts miteinander durchgehend verbunden werden. Dies bedeutet, dass der Schneidkopf bei der Montage im in die Schaftausnehmung teilweise eingesteckten Zustand zu dem Schaft so verdreht werden kann, dass die relative Verdrehung des Schneidkopfs zum Schaft um die zentrale Drehachse des Schafts gesperrt ist. Dadurch wird ein Drehanschlag gebildet, der verhindert, dass sich der Schneidkopf weiter verdreht. Innerhalb eines bestimmten Winkelbereichs kann der Schneidkopf jedoch aus diesem Drehanschlag herausgedreht werden, was eine flexible und präzise Montage ermöglicht.

Gemäß einer Weiterbildung des Zerspanungswerkzeugs weist der Schneidkopf mehrere Reibschneiden auf. Diese Reibschneiden sind speziell dafür ausgelegt, den Schneidkopf für Reiboperationen zu nutzen. Beim Reiben handelt es sich um eine Zerspanungsoperation, bei der das abgetragene Spanvolumen pro Umdrehung des Schneidkopfs relativ gering ist. Diese Methode ermöglicht es, eine sehr hohe Oberflächengüte zu erzielen, was besonders wichtig ist, wenn präzise und glatte Oberflächen gefordert sind. Üblicherweise verjüngen sich die Reibschneiden jeweils in axialer Richtung weg von einer Stirnseite des Schneidkopfs.

Gemäß einer Weiterbildung des Zerspanungswerkzeugs ist der Schneidkopf reversibel lösbar mit dem Schaft verbunden. Dies bedeutet, dass der Schneidkopf beispielsweise durch eine oder mehrere Schrauben, die sich axial entlang der zentralen Drehachse des Schafts durch den Schneidkopf erstrecken, mit dem Schaft verschraubt ist, was die Stabilität und Präzision des Zerspanungswerkzeugs während des Einsatzes erhöht.

Gemäß einer Weiterbildung des Zerspanungswerkzeugs sind die Schneidkopfmitnehmerflanken in axialer Richtung weg von der geschlossenen Schaftstirnplanfläche an einer beliebigen Stelle zum Schaft axial beabstandet. Diese "axial schwebende" Anordnung führt dazu, dass ein umlaufender, geschlossener Spalt um die zentrale Drehachse des Schafts gebildet wird. Dieser Spalt ist mit den Freiräumen verbunden, die sich entlang der Zwischeninnenseitenflächen jeweils durchgehend erstrecken. Durch diese Konstruktion wird eine präzise und kontrollierte Übertragung des Drehmoments vom Schaft auf den Schneidkopf ermöglicht. Dies liegt daran, dass die entsprechenden axial unteren und somit von der geschlossenen Schaftstirnplanfläche abgewandten Seiten der Schneidkopfmitnehmerflanken in axialer Richtung weg von der geschlossenen Schaftstirnplanfläche reibschlussfrei zum Schaft angeordnet sind. Diese Anordnung minimiert Reibung und sorgt für eine effiziente Kraftübertragung, was die Leistungsfähigkeit und Lebensdauer des Zerspanungswerkzeugs erhöht.

Gemäß einer Weiterbildung des Zerspanungswerkzeugs weist der Zentrierbereich des Schneidkopfs eine durchgehend außenkonusförmige Zentrierfläche auf. Die solchermaßen durchgehende außenkonusförmige Zentrierfläche des Schneidkopfs ermöglicht eine exakte Ausrichtung des Schneidkopfs an der zentralen Drehachse des Schafts, was die Präzision der Zerspanungsoperationen mit dem Zerspanungswerkzeug erhöht. Durch die konische Form wird der Schneidkopf sicher und stabil in dem Schaft gehalten, was Vibrationen und Bewegungen während des Zerspanens minimiert. Die konische Form sorgt für eine gleichmäßige Verteilung der Kräfte. "Außenkonusförmig" beschreibt eine Form, die einem Konus folgt und sich im in die Schaftausnehmung eingesteckten Zustand in axialer Richtung entlang der zentralen Drehachse des Schafts weg von der geschlossenen Schaftstirnplanfläche verjüngt. Der Schaft weist folglich eine zur durchgehenden außenkonusförmigen Zentrierfläche des Schneidkopfs korrespondierende durchgehende innenkonusförmige Zentrierfläche auf, die die durchgehend außenkonusförmige Zentrierfläche des Schneidkopfs bezüglich der zentralen Drehachse des Schafts zentrierend aufnimmt.

Gemäß einer Weiterbildung des Zerspanungswerkzeugs weist der Schneidkopf eine polygonale Entsperrausnehmung zum Losdrehen des Schneidkopfs aus einem mit dem Schaft im Bereich des Zentrierbereichs des Schneidkopfs gebildeten Reibschlusses auf. Dieser Reibschluss wird zwischen dem Zentrierbereich des Schneidkopfs und dem Bereich, der den Zentrierbereich des Schneidkopfs bezüglich der zentralen Drehachse des Schafts zentrierend aufnimmt, gebildet. Die polygonale Entsperrausnehmung ist üblicherweise der Form eines Innensechskants folgend ausgebildet, so dass ein korrespondierendes Sechskantwerkzeug in die polygonale Entsperrausnehmung eingesteckt und bezüglich der zentralen Drehachse des Schafts gedreht werden kann, so dass der Schneidkopf auf diese Weise mit einem Drehimpuls beaufschlagt werden kann, so dass der Reibschluss besser gelöst werden kann. Denkbar und auch möglich ist aber auch eine von einem Innensechskant abweichende mehrkantige polygonale Form der Entsperrausnehmung, zum Beispiel als Innendreikant, Innenvierkant, Innenfünfkant usw.

Weitere Vorteile und Zweckmäßigkeiten der Erfindung ergeben sich anhand der nachfolgenden Beschreibung von einem Ausführungsbeispiel unter Bezugnahme auf die beigefügten Figuren.

Von den Figuren zeigen
- Fig. 1:: eine perspektivische Darstellung eines entlang einer zentralen Drehachse erstreckten Zerspanungswerkzeugs;
- Fig. 2:: eine Darstellung des Zerspanungswerkzeugs in seitlicher Blickrichtung auf das Zerspanungswerkzeug;
- Fig. 3:: eine Darstellung des Zerspanungswerkzeugs in Blickrichtung auf eine Stirnseite des Zerspanungswerkzeugs;
- Fig. 4:: eine perspektivische Darstellung eines vorderen Schaftbauteils des Zerspanungswerkzeugs;
- Fig. 5:: eine Darstellung des vorderen Schaftbauteils in Blickrichtung auf eine Stirnseite;
- Fig. 6:: eine Darstellung des vorderen Schaftbauteils in seitlicher Blickrichtung;
- Fig. 7:: eine perspektivische Darstellung eines Schneidkopfs des Zerspanungswerkzeugs;
- Fig. 8:: eine Darstellung des Schneidkopfs in Blickrichtung auf eine geschlossene Schneidkopfplanfläche;
- Fig. 9:: eine Darstellung des Schneidkopfs in seitlicher Blickrichtung;
- Fig. 10:: eine Darstellung des Schneidkopfs in Blickrichtung auf eine Stirnseite;
- Fig. 11:: eine Querschnittsdarstellung des Zerspanungswerkzeugs ohne Schraffur gemäß den Schnittlinien X-X in Fig. 2;
- Fig. 12:: eine Längsschnittdarstellung des Zerspanungswerkzeugs gemäß den Schnittlinien XII-XII in Fig. 3.

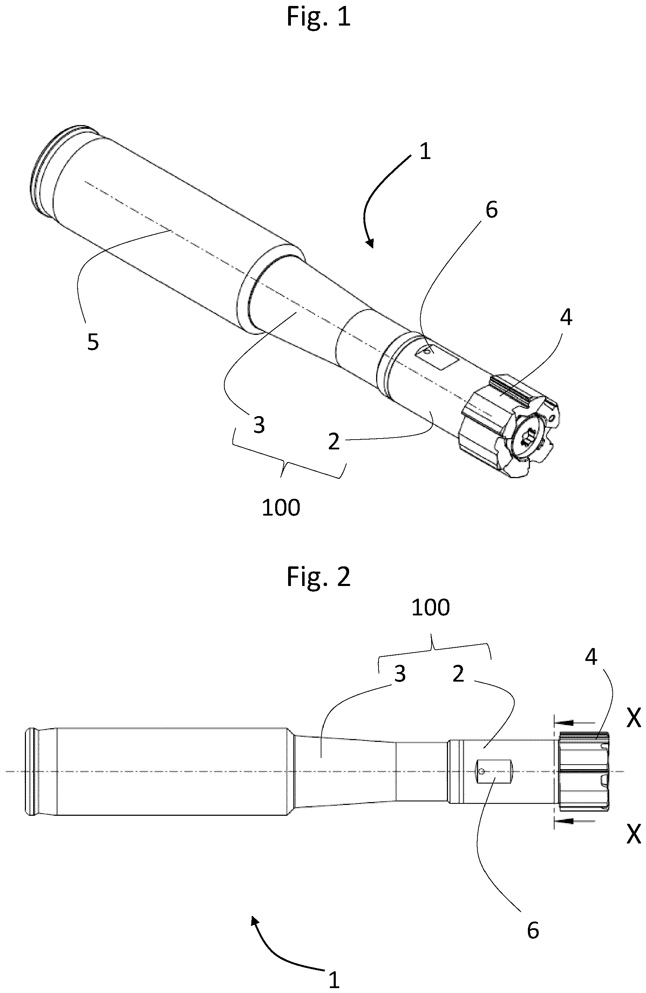

Die Fig. 1 und 2 zeigen ein Zerspanungswerkzeug 1 in perspektivischer bzw. seitlicher Ansicht. Das Zerspanungswerkzeug 1 umfasst einen Schaft 100 mit einem vorderen Schafbauteil 2 und einem hinteren Schaftbauteil 3, die stoffschlüssig miteinander verbunden sind. Das vordere Schaftbauteil 2 und das hintere Schaftbauteil 3 sind jeweils aus einem Stahl hergestellt.

Das Zerspanungswerkzeug 1 umfasst ferner einen Schneidkopf 4, der monolithisch aus gesintertem Hartmetall hergestellt ist.

Der Schneidkopf 4 ist bezüglich der zentralen Drehachse 5 des vorderen Schaftbauteils 2 zentriert. Das vordere Schaftbauteil 2 ist ebenfalls bezüglich des hinteren Schaftbauteils 3 zentriert, sodass die zentrale Drehachse 5 des vorderen Schaftbauteils 2 eine gemeinsame zentrale Drehachse des Zerspanungswerkzeugs 1 bildet. Das Zerspanungswerkzeug 1 ist zur Ausführung einer Zerspanungsoperation drehantreibbar ausgebildet.

Das vordere Schaftbauteil 2 weist zwei diametral gegenüberliegende Abflachungen 6 auf, wodurch das vordere Schaftbauteil 2 bei der Montage und Demontage leichter relativ zum Schneidkopf 4 verdreht werden kann.

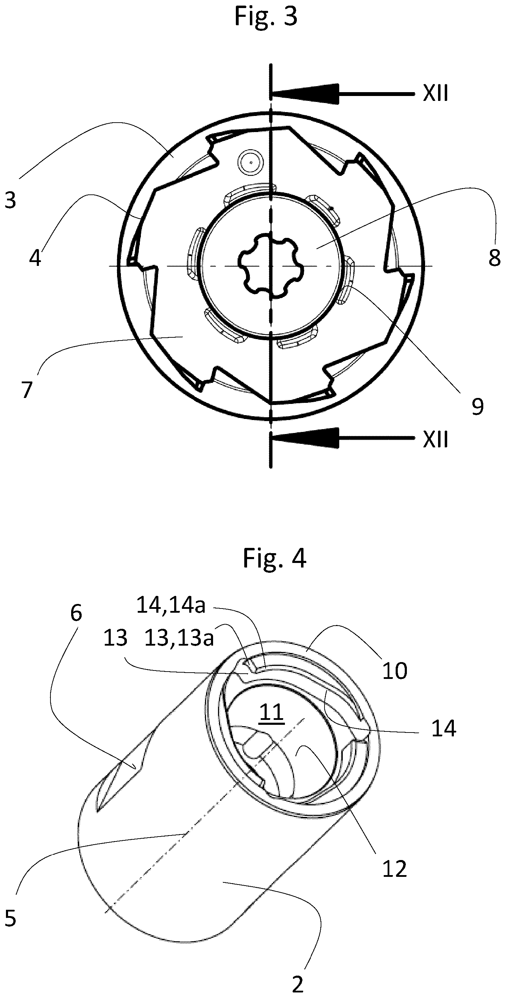

Fig. 3 zeigt das Zerspanungswerkzeug 1 in Blickrichtung parallel zur zentralen Drehachse 5 auf eine Stirnseite 7 des Schneidkopfs 4. In Fig. 3 ist besonders gut zu erkennen, dass die Stirnseite 7 durch eine Schraube 8 in axialer Richtung und zentrisch bezüglich der zentralen Drehachse 5 reversibel lösbar mit dem vorderen Schaftbauteil 2 verbunden. Die Schraube 8 ist von mehreren Kühlmittelaustritten 9 des Schneidkopfs 4 umgeben, aus denen Kühlmittel aus der Stirnseite 7 austreten kann.

Fig. 4 zeigt das vordere Schaftbauteil 2 in perspektivischer Ansicht. Das vordere Schaftbauteil 2 ist hülsenförmig ausgebildet und weist eine geschlossene Schaftstirnplanfläche 10 auf, die die zentrale Drehachse 5 ringförmig umgibt und eine Schaftausnehmung 11 stirnseitig durchgehend berandet. Die Schaftstirnplanfläche 10 erstreckt sich senkrecht zur zentralen Drehachse 5 und ist eben ausgebildet. Im montierten Zustand gemäß Fig. 1 liegt der Schneidkopf 4 auf der Schaftstirnplanfläche 10 auf und ist teilweise in die Schaftausnehmung 11 eingesteckt. Dadurch kann der Schneidkopf 4 außerhalb des vorderen Schaftbauteils 2 schneiden und ist innerhalb der Schaftausnehmung 11 drehmomentschlüssig, zentriert und reversibel lösbar mit dem vorderen Schaftbauteil 2 verbunden.

Die Schaftausnehmung 11 ist von einer Schaftinnenseite 12 des vorderen Schaftbauteils 2 umfänglich umgeben. Die Schaftinnenseite 12 weist drei Schaftmitnehmerflanken 13 auf, die bezüglich der zentralen Drehachse 5 gleichmäßig verteilt sind und sich jeweils axial und radial erstrecken. In Fig. 4 ist eine dieser Schaftmitnehmerflanken 13 flächenmäßig ersichtlich. Die Schaftmitnehmerflanken 13 sind in Umfangsrichtung alternierend mit Zwischeninnenseitenflächen 14 der Schaftinnenseite 12 verbunden, sodass bei einem Umlauf um die zentrale Drehachse 5 auf jede Schaftmitnehmerflanke 13 lückenlos eine Zwischeninnenseitenfläche 14 folgt und umgekehrt. Die Schaftmitnehmerflanken 13 sind jeweils auf der Seite der Schaftstirnplanfläche 10 mit einer Fasenfläche 13a versehen. Ebenso sind die Zwischeninnenseitenflächen 14 auf der Seite der Schaftstirnplanfläche 10 jeweils mit einer Fasenfläche 14a versehen.

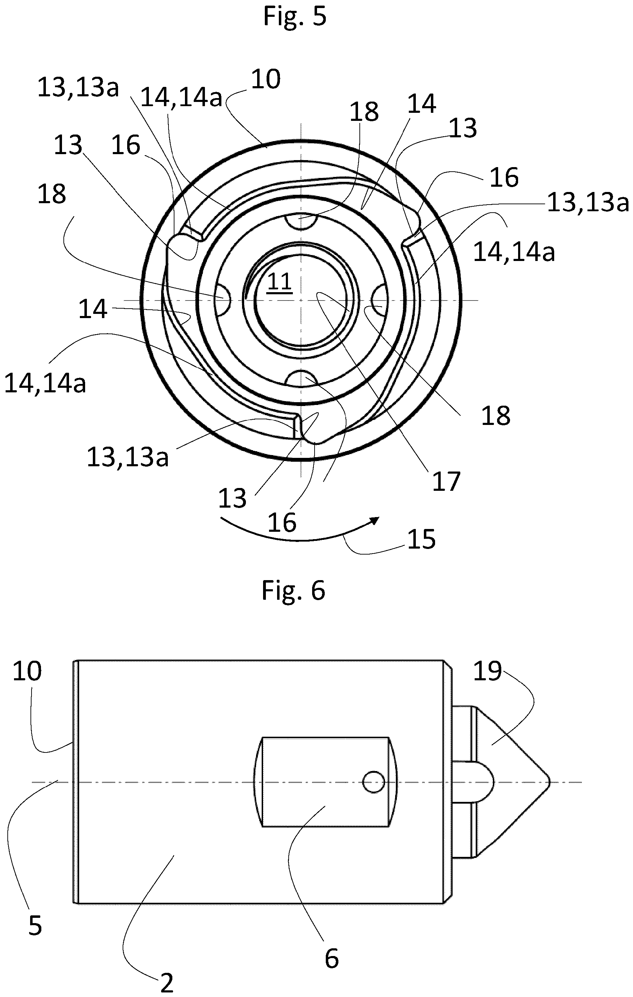

Fig. 5 zeigt das vordere Schaftbauteil 4 in Blickrichtung parallel zur zentralen Drehachse 5 auf die Schaftstirnplanfläche 10. In Fig. 5 ist besonders gut zu erkennen, dass die Schaftmitnehmerflanken 13 in Bezug auf die Drehrichtung 15 entlang der zentralen Drehachse 5 voreilend angeordnet sind und somit relativ zum Schneidkopf 4 gedreht werden können. Ebenfalls gut sichtbar in Fig. 5 sind die ausgekehlten Bereiche 16 der Schaftinnenseite 12, die jeweils Teil der Zwischeninnenseitenflächen 14 sind. Diese ausgekehlten Bereiche 16 verringern das Kollisionsrisiko des Schneidkopfs 4 mit dem vorderen Schaftbauteil 2 beim axialen Einsetzen entlang der zentralen Drehachse 5. Im vorderen Schaftbauteil 2 ist axial unterhalb der Zwischeninnenseitenflächen 14 ein Innengewinde 17 ausgebildet, das mit der in Fig. 3 gezeigten Schraube 8 zusammenwirkt. Zudem sind in Fig. 5 vier umfänglich verteilte Kühlmittelkanäle 18 des vorderen Schaftbauteils 2 erkennbar, die mit den in Fig. 3 gezeigten Kühlmittelaustritten 9 fluidkommunizierend verbunden sind.

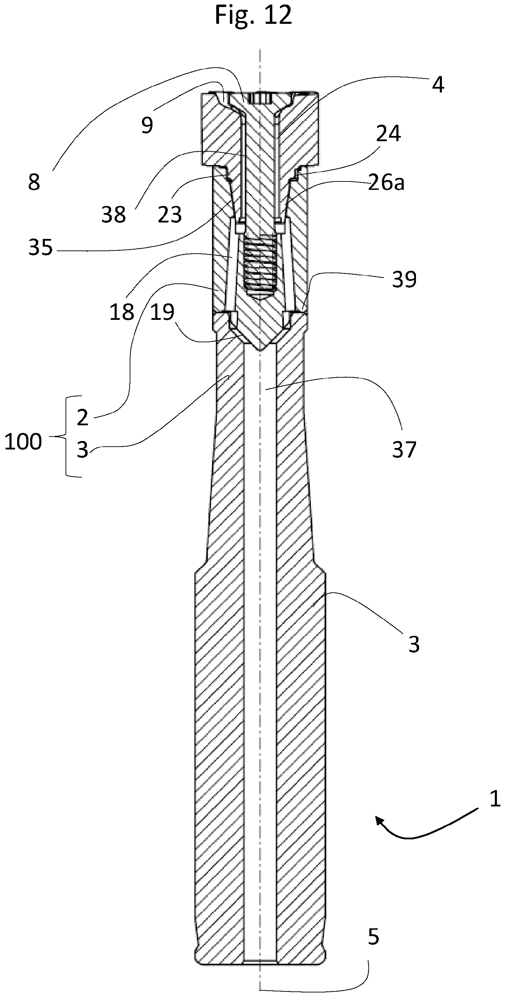

Fig. 6 zeigt in einer seitlichen Darstellung des vorderen Schaftbauteils 2, dass das vordere Schaftbauteil 2 einen durchgehenden außenkonusförmigen Endbereich 19 aufweist, der zur Kühlmittelleitung ausgebildet, auf die Bezug nehmend auf Fig. 12 näher eingegangen wird.

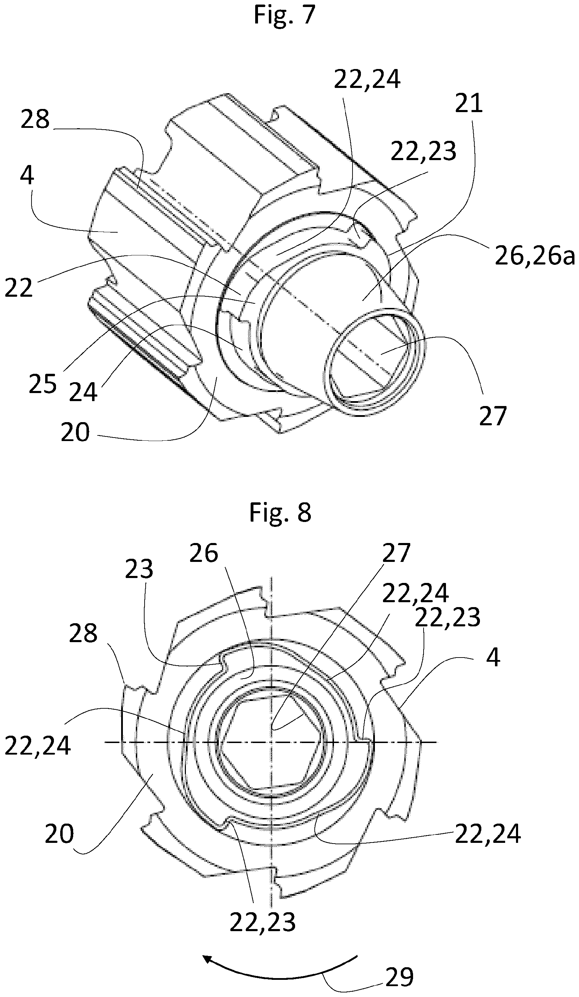

Fig. 7 zeigt eine perspektivische Darstellung des Schneidkopfs 4. In Fig. 7 ist zu erkennen, dass der Schneidkopf 4 eine geschlossene Schneidkopfplanfläche 20 aufweist, mit der der Schneidkopf 4 auf der geschlossenen Schaftstirnplanfläche 10 unter Bildung einer planen Auflage aufliegt. Die geschlossene Schneidkopfplanfläche 20 ist senkrecht zur zentralen Drehachse 5 erstreckend ausgebildet. Die geschlossene Schneidkopfplanfläche 20 ist mit einem axialen Vorsprung 21 des Schneidkopfs 4 verbunden. Der axiale Vorsprung 21 ist im montierten Zustand des Zerspanungswerkzeugs 1 gemäß Fig. 1 in die Schaftausnehmung 11 eingesteckt. Der axiale Vorsprung 21 weist eine Schneidkopfaußenseite 22 auf, die drei jeweils axial und radial zur zentralen Drehachse 5 erstreckende Schneidkopfmitnehmerflanken 23 aufweist. Die Schneidkopfmitnehmerflanken 23 sind bezüglich der zentralen Drehachse 5 im gleichen Winkelabstand zu den Schaftmitnehmerflanken 13 angeordnet.

Im montierten Zustand des Zerspanungswerkzeugs 1 gemäß Fig. 1 schlagen die Schneidkopfmitnehmerflanken 23 seitlich gegen die Schaftmitnehmerflanken 13 an, so dass eine relative Verdrehung des Schneidkopfs 4 zum vorderen Schaftbauteil 2 und damit zum Schaft 100 um die zentrale Drehachse 5 gesperrt ist. Zwischen den Schneidkopfmitnehmerflanken 23 weist die Schneidkopfaußenseite 22 jeweils eine Zwischenaußenseitenfläche 24 auf, durch die die Schneidkopfmitnehmerflanken 23 miteinander verbunden sind. Die Zwischenaußenseitenflächen 24 sind alternierend mit den Schneidkopfmitnehmerflanken 23 abwechselnd angeordnet.

Der axiale Vorsprung 21 weist axial gegenüberliegend von der geschlossenen Schneidkopfplanfläche 20 eine Bodenfläche 25 im Bereich der

Schneidkopfmitnehmerflanken 23 und Zwischenaußenseitenflächen 24 auf. Im montierten Zustand des Zerspanungswerkzeugs 1 gemäß Fig. 1 ist die Bodenfläche 25 axial vom vorderen Schaftbauteil 2 beabstandet, sodass die Bodenfläche 25 sowie die Schneidkopfmitnehmerflanken 23 und Zwischenaußenseitenflächen 24 in axialer Richtung gegenüberliegend von der geschlossenen Schneidkopfplanfläche 20 und damit der Schaftstirnplanfläche 10 reibungsfrei zum vorderen Schaftbauteil 2 angeordnet sind.

Der axiale Vorsprung 21 weist ferner einen außenkonusförmigen Zentrierbereich 26 mit einer durchgehenden außenkonusförmigen Fläche 26a auf, die zur Zentrierung des Schneidkopfs 4 bezüglich der zentralen Drehachse 5 in das vordere Schaftbauteil 2 im montierten Zustand des Zerspanungswerkzeugs 1 gemäß Fig. 1 eingesteckt ist. Der axiale Vorsprung 21 weist eine sechskantige und damit polygonale Entsperrausnehmung 27 zum Losdrehen des Schneidkopfs 4 aus einem mit dem vorderen Schaftbauteil 2 im Bereich des Zentrierbereichs 26 gebildeten Reibschlusses auf. So kann in die Entsperrausnehmung 27 ein Sechskantwerkzeug eingesteckt werden, so dass der Schneidkopf 4 durch eine Drehung des Sechskantwerkzeugs bezüglich der zentralen Drehachse 5 mit einem Drehimpuls beaufschlagt werden kann, so dass der Reibschluss leichter gelöst werden kann.

In Fig. 7 ist ferner zu erkennen, dass der Schneidkopf 4 sechs axial erstreckte und radial sich in axialer Richtung weg von Stirnseite 7 des Schneidkopfs 4 verjüngende Reibschneiden 28 aufweist.

Fig. 8 zeigt eine Darstellung des Schneidkopfs 4 in Blickrichtung parallel entlang der zentralen Drehachse 5 auf die Schneidkopfplanfläche 20. In Fig. 8 ist die Drehrichtung 29 zu erkennen, in der der Schneidkopf 4 gemäß der gewählten Blickrichtung parallel entlang der zentralen Drehachse 5 auf die Schneidkopfplanfläche 20 gedreht werden muss, damit die Reibschneiden 28 schneiden, indem die Schaftmitnehmerflanken 13 in die Drehrichtung 29 gedreht werden.

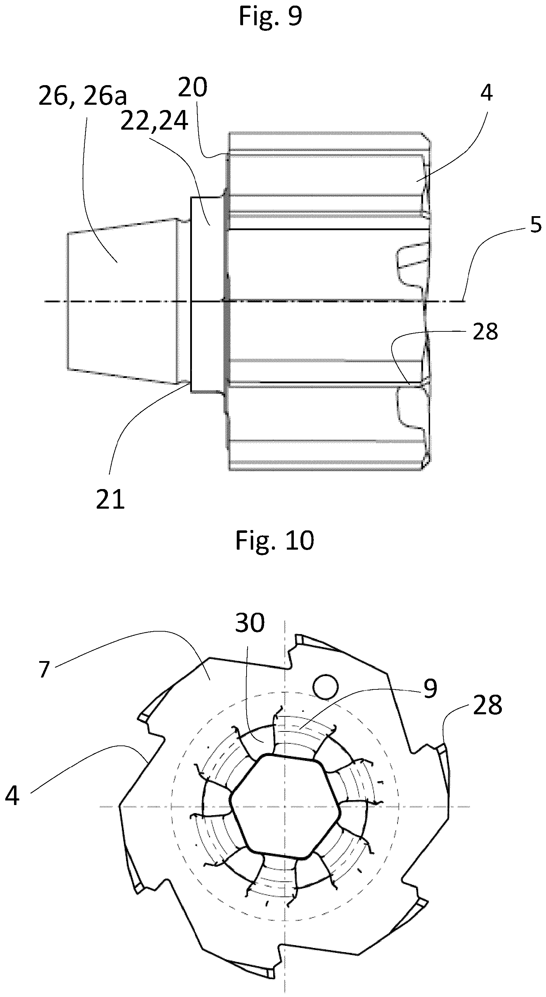

Fig. 9 zeigt eine seitliche Darstellung des Schneidkopfs 4. In Fig. 9 ist besonders gut zu erkennen, dass der axiale Vorsprung 21 von der Schneidkopfplanfläche 20 vorspringt.

Fig. 10 stellt den Schneidkopf 4 analog zu seiner Darstellung in Fig. 3 dar, jedoch ohne die Schraube 8. Fig. 10 zeigt, dass der Schneidkopf 4 Auflageflächen 30 für die Schraube 8 aufweist, die alternierend mit den Kühlmittelaustritten 9 angeordnet sind. Die Kühlmittelaustritte 9 sind als Vertiefungen in der Stirnseite 7 des Schneidkopfs 4 ausgebildet und werden von der Schraube 8 gedeckelt.

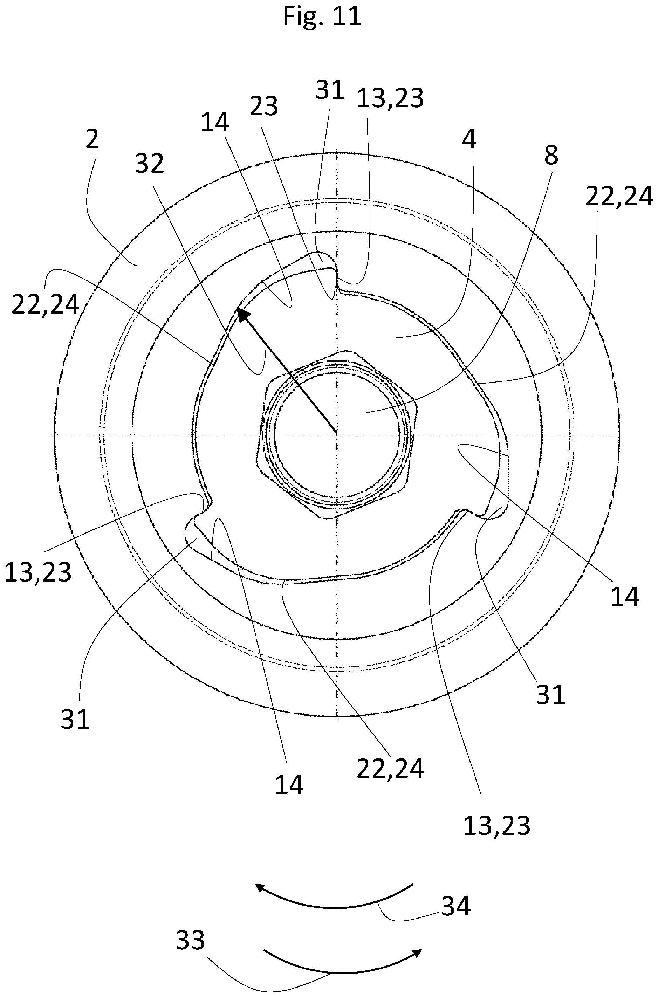

Fig. 11 zeigt einen Querschnitt des Zerspanungswerkzeugs 1 entlang der Schnittlinie X-X aus Fig. 2. Aus Gründen der besseren Übersichtlichkeit werden keine Schraffuren dargestellt. In Fig. 11 ist besonders gut zu erkennen, dass die Zwischeninnenseitenflächen 14 auf Höhe der Schneidkopfmitnehmerflanken 23 jeweils durchgehend an einen Freiraum 31 zur Schneidkopfaußenseite 22 im Bereich der Zwischenaußenseitenflächen 24 angrenzen. Dadurch ist die Schneidkopfaußenseite 22 in beliebiger radialer Richtung 32 bezüglich der zentralen Drehachse 5 von den Zwischeninnenseitenflächen 14 beabstandet.

Die Freiräume 31 erstrecken sich jeweils durchgehend zwischen den Schaftmitnehmerflanken 13 und den Schneidkopfmitnehmerflanken 23 und werden durch die seitlichen Anschläge der Schneidkopfmitnehmerflanken 23 gegen die Schaftmitnehmerflanken 13 in Umfangsrichtung voneinander isoliert. Aufgrund der Freiräume 31 überträgt der Schneidkopf 4 im Bereich der Zwischenaußenseitenflächen 24 keine radialen Kräfte auf das vordere Schaftbauteil 2, während die Schneidkopfmitnehmerflanken 23 seitlich gegen die Schaftmitnehmerflanken 13 anschlagen. Aufgrund der radialen und axialen Erstreckung der Schneidkopfmitnehmerflanken 23 und der Schaftmitnehmerflanken 13 werden durch ihr gegenseitiges seitliches Anschlagen faktisch keine radialen Kräfte in das vordere Schaftbauteil 2 übertragen.

In Fig. 11 ist ferner zu erkennen, dass die Zwischenaußenseitenflächen 24 jeweils durchgehend an einen der Freiräume 31 angrenzen. Dadurch wird jeder Freiraum 31 in radialer Richtung 32 bezüglich der zentralen Drehachse 5 von einer der Zwischenaußenseitenflächen 24 und einer der Zwischeninnenseitenflächen 14 begrenzt mit Ausnahme der Bereiche, in denen die Schneidkopfmitnehmerflanken 23 seitlich gegen die Schaftmitnehmerflanken 13 anschlagen. In diesen Bereichen werden die Freiräume 31 durch den seitlichen Kontakt der Schaftmitnehmerflanken 13 mit den Schneidkopfmitnehmerflanken 23 begrenzt.

In Fig. 11 ist ferner zu erkennen, dass die Schaftmitnehmerflanken 13 und die Schneidkopfmitnehmerflanken 23 so angeordnet sind, dass die Freiräume 31 durch eine Drehung des Schneidkopfs 4 in die Drehrichtung 33 um die zentrale Drehachse 5 relativ zum vorderen Schaftbauteil 2 miteinander verbunden werden können, ohne dass die Zwischeninnenseitenflächen 14 in Kontakt mit den Zwischenaußenseitenflächen 24 kommen. Dies ist möglich, wenn die Schraube 8 gelöst wird. In diesem gelösten Zustand kann der Schneidkopf 4 in die entgegengesetzte Drehrichtung 34 relativ zum vorderen Schaftbauteil 2 gedreht werden, bis die Schneidkopfmitnehmerflanken 23 seitlich wieder gegen die Schaftmitnehmerflanken 13 anschlagen, also so wie in Fig. 11 gezeigt. Dadurch wird eine weitere relative Verdrehung des vorderen Schaftbauteils 2 zum Schneidkopf 4 um die zentrale Drehachse 5 gesperrt, wobei die Zwischeninnenseitenflächen 14 kontaktfrei relativ zu den Zwischenaußenseitenflächen 24 gedreht werden.

In Fig. 12 ist das Zerspanungswerkzeug 1 in einem Längsschnitt gemäß der Schnittlinie XII-XII aus Fig. 3 dargestellt. In Fig. 12 ist zu erkennen, dass der Zentrierbereich 26 mit einer durchgehenden außenkonusförmigen Fläche 26a des Schneidkopfs 4 in einen korrespondierend ausgebildeten durchgehenden innenkonusförmigen Zentrierbereich 35 des vorderen Schaftbauteils 2 zentrierend aufgenommen wird, sodass die Zentrierung des Schneidkopfs 4 damit außerhalb der Schneidkopfmitnehmerflanken 23 und außerhalb von der geschlossenen Schaftstirnplanfläche 10 realisiert wird. In Fig. 12 ist ferner zu erkennen, dass ein zentraler Kanal 37 des hinteren Schaftbauteils 3 mit den weiteren Kanälen 18 im Bereich des vorderen Schaftbauteils 2 fluidkommunizierend verbunden ist, wobei die weiteren Kanäle 18 mit durch die Schraube 8 und den Schneidkopf 4 gebildeten Kanälen 38 und durch diese mit den Kühlmittelaustritten 9 fluidkommunizierend verbunden sind und wobei der außenkonusförmige Endbereich 19 das Kühlmittel in die weiteren Kanäle 18 umlenkt. Fig. 12 macht deutlich, dass die Schneidkopfmitnehmerflanken 23 in axialer Richtung entlang der zentralen Drehachse 5 zwischen dem Zentrierbereich 26 des Schneidkopfs 4 und der in Fig. 4 gezeigten Schaftstirnplanfläche 10 angeordnet sind.

Das vordere Schaftbauteil 2 liegt auf einer Stirnseite 39 des hinteren Schaftbauteils 3 auf und ist mit diesem an dieser Stelle stoffschlüssig verbunden.

Die Fig. 1 bis 12 zeigen ein Zerspanungswerkzeug 1, bei dem der Schneidkopf 4 besonders präzise auf der Schaftstirnplanfläche 10 aufliegt, weil die Zwischeninnenseitenflächen 14 jeweils durchgehend an einen Freiraum 31 angrenzen, sodass es allenfalls dort zu einer Übertragung von radialen Kräften auf das vordere Schaftbauteil 2 durch eine Drehmomentübertragung von dem vorderen Schaftbauteil 2 auf den Schneidkopf 4 kommen kann, wo die Schneidkopfmitnehmerflanken 23 gegen die Schaftmitnehmerflanken 13 seitlich anschlagen.

Das bezüglich Fig. 12 beschriebene Kühlmittelkanalsystem des Zerspanungswerkzeugs 1 ist optional. Die Anzahl der Schneidkopfmitnehmerflanken 13 kann größer als drei sein. Die jeweils radiale und axiale Erstreckung der Schneidkopfmitnehmerflanken 23 und Schaftmitnehmerflanken 13 ist vorteilhaft, weil dadurch auch im Bereich ihres gegenseitigen Anschlagens radiale Reaktionskraftkomponenten faktisch auf null reduziert werden, sodass dementsprechend hauptsächlich tangentiale Reaktionskräfte für eine Übertragung des Drehmoments von dem vorderen Schaftbauteil 2 auf den Schneidkopf 4 verantwortlich sind. Denkbar und auch möglich ist es aber dennoch, dass von einer solchen radialen und axialen Erstreckung abgewichen wird. Der Schaft 100 kann, wie z. B. im Fig. 1, 2 und 12 gezeigt, mehrteilig aus dem vorderen Schaftbauteil 2 und dem hinteren Schaftbauteil 3 gebildet sein. Denkbar und auch möglich ist es aber auch, dass der Schaft 100 einstückig ausgebildet ist.

Das Zerspanungswerkzeug 1 ist als Reibwerkzeug ausgebildet, weil es für ein solches Werkzeug einen präzise ausgerichteten Schneidkopf 4 benötigt. Denkbar und auch möglich ist es aber auch, dass das Zerspanungswerkzeug 1 für eine andere Zerspanungsoperation wie Fräsen oder Bohren ausgebildet ist, indem insbesondere das Design der Reibschneiden 28 entsprechend geändert wird, so dass aus ihnen Frässchneiden beziehungsweise Bohrschneiden werden, wobei selbstverständlich die Anzahl dieser Schneiden geändert werden kann. Somit ist es auch denkbar und möglich die Anzahl der Reibschneiden 28 zu verändern.

## Patentansprüche

1. Zerspanungswerkzeug (1), umfassend einen Schaft (100) und einen Schneidkopf (4), der auf einer geschlossenen Schaftstirnplanfläche (10) des Schafts (100) mit einer geschlossenen Schneidkopfplanfläche (20) aufliegt und durch die geschlossene Schaftstirnplanfläche (10) in eine Schaftausnehmung (11) des Schafts (100) teilweise eingesteckt ist, wobei die Schaftausnehmung (11) von einer Schaftinnenseite (12) des Schafts (100) umfänglich umgeben ist, wobei die Schaftinnenseite (12) mehrere Schaftmitnehmerflanken (13) und alternierend abwechselnd mit den Schaftmitnehmerflanken (13) sie miteinander verbindende Zwischeninnenseitenflächen (14) aufweist, wobei der Schneidkopf (4) eine in die Schaftausnehmung (11) eingesteckte Schneidkopfaußenseite (22) mit mehreren Schneidkopfmitnehmerflanken (23) aufweist, die seitlich so gegen die Schaftmitnehmerflanken (13) anschlagen, dass eine relative Verdrehung des Schneidkopfs (4) zum Schaft (100) um eine zentrale Drehachse (5) des Schafts (100) gesperrt ist, wobei die Zwischeninnenseitenflächen (14) auf Höhe der Schneidkopfmitnehmerflanken (23) jeweils durchgehend an einen Freiraum (31) zur Schneidkopfaußenseite (22) angrenzen, wobei der Schneidkopf (100) einen in den Schaft (100) zentrierend eingesteckten Zentrierbereich (26) aufweist.

2. Zerspanungswerkzeug (1) nach Anspruch 1, wobei die Schneidkopfaußenseite (22) alternierend abwechselnd mit den Schneidkopfmitnehmerflanken (23) sie miteinander verbindende Zwischenaußenseitenflächen (24) aufweist, die jeweils durchgehend an einen der Freiräume (31) angrenzen.

3. Zerspanungswerkzeug (1) nach einem der vorhergehenden Ansprüche, wobei die Schneidkopfmitnehmerflanken (23), die seitlich gegen die Schaftmitnehmerflanken (13) anschlagen, und diese Schaftmitnehmerflanken (13) jeweils radial und axial erstreckend bezüglich der zentralen Drehachse (5) des Schafts (100) ausgebildet sind.

4. Zerspanungswerkzeug (1) nach einem der vorhergehenden Ansprüche, wobei die Schaftmitnehmerflanken (13) und die Schneidkopfmitnehmerflanken (23) umfänglich so angeordnet sind, dass die Freiräume (31) durch eine zur relativen Verdrehung entgegensetzte relative Verdrehung des Schneidkopfs (4) zum Schaft (100) um die zentrale Drehachse (5) des Schafts (100) miteinander durchgehend verbunden werden.

5. Zerspanungswerkzeug (1) nach einem der vorhergehenden Ansprüche, wobei der Schneidkopf (4) mehrere Reibschneiden (28) aufweist.

6. Zerspanungswerkzeug (1) nach einem der vorhergehenden Ansprüche, wobei der Schneidkopf (4) reversibel lösbar mit dem Schaft (100) verbunden ist.

7. Zerspanungswerkzeug (1) nach einem der vorhergehenden Ansprüche, wobei die Schneidkopfmitnehmerflanken (23) in axialer Richtung weg von der geschlossenen Schaftstirnplanfläche (10) an einer beliebigen Stelle zum Schaft (100) axial beabstandet sind.

8. Zerspanungswerkzeug (1) nach einem der vorhergehenden Ansprüche, wobei der Zentrierbereich (26) des Schneidkopfs (4) eine durchgehend außenkonusförmige Zentrierfläche (26a) aufweist.

9. Zerspanungswerkzeug (1) nach einem der vorhergehenden Ansprüche, wobei der Schneidkopf (4) eine polygonale Entsperrausnehmung (27) zum Losdrehen des Schneidkopfs (4) aus einem mit dem Schaft (100) im Bereich des Zentrierbereichs (26) des Schneidkopfs (4) gebildeten Reibschlusses aufweist.
